# EUROPÄISCHE PATENTSCHRIFT

(11) **EP 0 660 744 B1**
(45) Veröffentlichungstag und Bekanntmachung des Hinweises auf die Patenterteilung: **19.06.1996**
(21) Anmeldenummer: 93921843.4
(22) Anmeldetag: 17.09.1993
(51) Int. Cl.: B01D 15/08, B01D 15/02, B01D 53/02, G01N 30/56, G01N 30/38

(54) **KONTINUIERLICHE CHROMATOGRAPHIE**
CONTINUOUS CHROMATOGRAPHY
CHROMATOGRAPHIE CONTINUE

(30) Priorität: 18.09.1992 DE 4231327
(43) Veröffentlichungstag der Anmeldung: 05.07.1995
(73) Patentinhaber: Reuter Chemischer Apparatebau KG, D-79110 Freiburg (DE)
(72) Erfinder: REUTER, Karl, D-79110 Freiburg (DE)
(86) Internationale Anmeldenummer: EP9302583
(87) Internationale Veröffentlichungsnummer: WO9406532

(56) Entgegenhaltungen:
- WO-A-92/16275
- AU-A- 433 510
- US-A- 3 417 548
- US-A- 3 503 712
- US-A- 3 511 028
- US-A- 5 139 680

## Beschreibung

Die Erfindung betrifft ein Verfahren und eine Vorrichtung zur kontinuierlichen Chromatographie (CC).

Unter Chromatographie versteht man ein Trennverfahren, bei dem die zu trennenden Substanzen üblicherweise über Phasen verteilt aufgrund physikalischer und chemischer Unterschiede und Prinzipien voneinander getrennt, durch geeignete Detektionsverfahren nachgewiesen und durch Elution isoliert werden können. Von den in der Chromatographie verwendeten Phasen ist eine Phase unbeweglich (stationär) und besitzt in der Regel eine große Oberfläche, die andere ist beweglich (mobil) und bewegt sich über oder durch die stationäre Phase. Die stationäre Phase kann dabei ein Feststoff (Adsorbens) oder eine Flüssigkeit sein, wobei im letzteren Fall die Unbeweglichkeit der Phase und ihre große Oberfläche dadurch erreicht werden, daß die Flüssigkeit als dünner Film auf einem porösen feinkörnigen Träger aufgebracht wird. Die mobile Phase ist in der Regel eine mit der stationären Phase nicht mischbare Flüssigkeit oder ein Gas. Aufgrund dieser Unterschiede unterscheidet man im allgemeinen zwischen einer Flüssig- Fest-Chromatotgraphie, einer Flüssig-Flüssig-Chromatographie, einer Gas-Fest-Chromatographie und einer Gas-Flüssig-Chromatographie Vom Trennprinzip her ist zwischen einer Adsorptions- und Verteilungs-Chromatographie zu unterscheiden, wobei die Auftrennung von Substanzgemischen durch die verschiedene Retention der Einzelstoffe an der stationären Phase zustande kommt. Da die Trennleistung einer Chromatographiesäule insbesondere auch von der Korngröße der stationären Phase (z.B. Größe der Oberfläche, Zonenverbreiterung durch unterschiedliche Weglängen) abhängig ist, arbeitet man bei der sogenannten Hochleistungs- (oder Hochdruck-) Flüssigkeits-Chromatographie (HPLC) mit wesentlich feinkörnigeren Materialien (5 bis 30 µm) als bei der Gel-Chromatographie (35 bis 75 µm) oder der Säulen-Chromatographie (120 bis 200 µm); durch die Feinkörnigkeit der Adsorbentien wird allerdings die Anwendung hoher Drucke (bis zu 400 bar) erforderlich.

Zur Durchführung der Chromatographie wird ein Substanzgemisch punktförmig am Start (auf der Säule, Dünnschicht usw.) aufgebracht und mittels der mobilen Phase (Gas bei GC, Lösungsmittel bei HPLC) transportiert. Dabei wird je nach dem Adsorptions/Desorptions-Gleichgewicht einer bestimmten Substanz diese unterschiedlich schnell durch oder über die stationäre Phase wandern, wobei die maximale Geschwindigkeit die Geschwindigkeit der mobilen Phase ist.

Die bisher bekannten Chromatographie-Verfahren besitzen aber verschiedene Nachteile So ist z.B. ein kontinuierlicher Betrieb solcher Chromatographieanlagen nicht möglich, und eine elektronisch gesteuerte Selbstoptimierung ist während eines laufenden Trennverfahrens kaum sinnvoll oder überhaupt durchführbar. Bei ähnlichen Retentionszeiten für verschiedene Substanzen gelingt die Trennung oft nur unvollständig; die Belegungssituation der adsorptiven Phase während einer präparativen Trennung (die der Wanderungszone eines noch ungetrennten Substanzgemisches entspricht) entspricht im Regelfall einer lokalen Überladung der stationären Phase, z.B. einer Säule, und die volie Trennleistung wird erst gegen das Ende zu erreicht, wenn die zu trennenden Substanzen bereits über einen größeren Säulenbereich verteilt sind, d.h. schon weitgehend aufgetrennt sind: der größte Teil der adsorptiven Phase (derjenige außerhalb der Wanderungszone) nimmt dagegen am momentanen Trenngeschehen nicht teil.

Die Verteilung erfolgt immer nur zwischen einem adsorptiven Medium (stationäre Phase) und dem Laufmittel (mobile Phase), aber nicht zwischen zwei weitgehend frei wählbaren Adsorptionsmedien, wie z.B. zwischen Adsorptionsmedien, die durch eine geeignete Wahl ihrer physikalischen, chemischen und/oder chiralen Eigenschaften für eine gute Trennung bestimmter Substanzen spezifisch auswählbar sind (wie z.B. zwei Enantiomere, unterschiedlich polare, sauer/basische oder gegensinnig (und in der Stärke regelbare) elektrisch geladene Sorptionsmedien).

Außerdem ist auch die Temperatur von stationärer Phase und mobiler Phase zwangsläufig etwa gleich, und es lassen sich unterschiedliche Temperaturen der beiden Phasen nicht einstellen.

Aufgabenstellung der vorliegenden Erfindung ist es, die mit den bisher bekannten Chromatographie-Verfahren verbundenen Nachteile zu vermeiden, und eine Chromatographie-Verfahren bereitzustellen, das sich für einen kontinuierlichen Betrieb eignet, wobei auch eine elektronisch gesteuerte Selbstoptimierung möglich ist, und das aufgrund frei wählbarer und für bestimmte Substanzen selektiv einstellbarer physikalischer, chemischer und/oder chiraler Bedingungen der verschiedenen Trennphasen eine rasche, kontinuierlich durchführbare und gute Trennung ermöglicht, wobei sich das Verfahren auch für einen präparativen oder auch technischen Maßstab eignet.

In der PCT-Anmeldung WO 92/16275 (veröffentlicht am 1.10.1992) des gleichen Anmelders wird ein Verfahren zur Trennung eines Stoffgemisches durch Sorption der Mischungskomponenten an zwei unterschiedlichen, in ihren Sorptionseigenschaften durch geeignete Wahl der Ladung. Polarität, Chiralität, Temperatur, Hohlraumgröße, Viskosität, etc. unabhängig voneinander einzeln auf das jeweilige Stoffgemisch einstellbaren Sorptionsmitteln, an denen die einzelnen Mischungskomponenten aufgrund ihrer unterschiedlichen physikalischchemischen oder sterischen (chiralen) Eigenschaften verschieden stark gebunden werden, beschrieben, das dadurch gekennzeichnet ist, daß man das zu trennende Stoffgemisch in den Trennraum zwischen zwei Oberflächen der Sorptionsmittel einbringt, wobei sich zwischen den einander gegenüberliegenden Oberflächen der Sorptionsmittel eine Zwischenraummedium befindet, in dem die Mischungskomponenten lösbar und/oder dispergierbar und/oder in das sie verdampfbar sind, und sich von den drei verschiedenen Phasen bestehend aus Oberflächen und Zwischenraummedium, mindestens zwei bei im wesentlichen gleichbleibenden Abstand zueinander in untershiedlicher Richtung bewegen, und man die auf den Sorptionsmitteln befindlichen aufgetrennten Komponenten des Gemisches nach Zurücklegen der Trennstrecke durch Desorption oder Elution gewinnt.

Nach diesem Verfahren ist es möglich, bestimmte Eigenschaften, wie z.B. die Art, Geschwindigkeit und Temperatur der einzelnen Phasen frei zu wählen und selektiv auf das zu trennende Gemisch einzustellen.

Es wurde nun gefunden, daß sich die mit dem Verfahren und er Vorrichtung gemäß WO 92/16275 erhaltenen Ergebnisse im Hinblick auf die der Aufgabenstellung zugrunde liegenden Ziele, insbesondere in Bezug auf eine Trennungsoptimierung und auch im technischen Maßstab einfach durchführbare Arbeitsweise und eine breite Anwendbarkeit des Verfahrens noch erheblich verbessern lassen, wenn man als Trennraum für das zu trennende Stoffgemisch einen solchen verwendet, der durch mindestens zwei oder mehrere hohle, mit Strukturelementen gefüllte, konzentrisch übereinander angeordnete Zylinderscheiben Z_{A} und Z_{B} gebildet wird, wobei die Zylinderscheiben Z_{A} und Z_{B} alternierend angeordnet sind und sich um eine gemeinsame Achse gegenläufig zueinander bewegen.

In der Zeichnung bedeuten:
Fig. 1:
   Eine schematische Darstellung einer Vorrichtung im Querschnitt;
Fig. 2:
   Eine schematische perspektivische Darstellung einer erfingungsgemäßen Vorrichtung;
Fig. 3 bis 7:
   Ausführungsformen für die in den Zylinderscheiben Z_{A} und Z_{B} vorhandenen Strukturelemente;
Fig. 8:
   Schematische Darstellung einer erfindungsgemäßen Vorrichtung mit zugeordneten Eintrags-, Austrags- und Umwälzsystemen;
Fig. 9:
   Schematische Darstellung einer erfindungsgemäßen Gummilamellenpumpe in perspektivischer Ansicht;
Fig. 10:
   Schematische Darstellung einer erfindungsgemäßen Doppelscheibenspalt-Reibungspumpe im Querschnitt;
Fig 11:
   Schematische Darstellung eines erfindungsgemäß verwendeten Endeinspeisungsystems in perspektivischer Darstellung;
Fig. 12:
   Schematische perspektivische Darstellung einer erfindungsgemäßen Trennanlage mit fest installierten Gefäßen, "3-Scheiben-Gegenstrom-Simulations-Ventil" und Wärmeaustauschersystem;
Fig. 13:
   Schematische perspektivische Darstellung eines erfindungsgemäßen "3-Scheiben-Gegenstrom-Simulations-Ventils";
Fig. 14:
   Schematische Darstellung von Bohrungen im "3-Scheiben-Gegenstrom-Simulations-Ventil" im Querschnitt;
Fig 15:
   Schematische perspektivische Darstellung eines erfindungsgemäßen fest installierten Gefäßes.

Das erfindungsgemäße Verfahren zur Trennung eines Stoffgemisches durch Sorption der Mischungskomponenten an zwei unterschiedliche, in ihren Sorptionseigenschaften unabhängig voneinander einzeln einstellbare Sorptionsmittel und durch Zurücklegen einer Trennstrecke der Sorptionsmittel mit den sorbierten Mischungskomponenten, nach dem man das zu trennende Stoffgemisch in den Trennraum (3) zwischen den Oberflächen der Sorptionsmittel (1,2) einbringt, wobei sich zwischen den Sorptionsmitteln (1,2) ein Zwischenraummedium befindet, in dem die Mischungskomponenten lösbar und/oder dispergierbar und/oder in das sie verdampfbar sind, und ein Austausch des Zwischenraummediums und damit eine Equilibrierung der aufzutrennenden Stoffe zwischen den Oberflächen der Sorptionsmittel (1,2) erfolgt, und sich die die Sorptionsmittel enthaltenden Phasen zueinander in gegenläufiger Richtung bewegen, und man die auf den Sorptionsmitteln befindlichen aufgetrennten Komponenten des Gemisches nach Zurücklegen der Trennstrecke gewinnt, ist dadurch gekennzeichnet, daß der Trennraum (3) durch mindestens zwei oder mehrere hohle, mit Strukturelementen gefüllte, konzentrisch übereinander angeordnete Zylinderscheiben (134, 135) Z_{A} und Z_{B} gebildet wird, die die aus den Sorptionsmitteln (1,2) bestehenden oder diese enthaltenden Trennmedien Ph_{A} und Ph_{B} enthalten, wobei die Zylinderscheiben Z_{A} und Z_{B} alternierend angeordnet sind und sich um eine gemeinsame Achse gegenläufig zueinander bewegen.

US-A-3511028 zeigt ein Verfahren, aus dem die Merkmale des Oberbegriffs von Anspruch 1 bekannt sind.

Als Sorptionsmittel (1,2) können dabei solche eingesetzt werden wie sie auch in der PCT-Anmeldung WO 92/16275 beschrieben werden und die sich in ihren Sorptionseigenschaften durch geeignete Wahl der Ladung, Polarität, Chiralität, Temperatur, Hohlraumgröße, Viskosität, etc. unabhängig voneinander einzeln auf das jeweilige Stoffgemisch einstellen lassen und an denen die einzelnen Mischungskomponenten aufgrund ihrer unterschiedlichen physikalisch-chemischen oder sterischen (chiralen) Eigenschaften verschieden stark gebunden werden.

Die Zylinderscheiben Z_{A} und Z_{B} besitzen vorzugsweise einen Außendurch-messer von 5 bis 5000, und insbesondere von 50 bis 2000 mm; ihre Höhe (Dicke) beträgt vorzugsweise 0.1 bis 2000 mm, und insbesondere 1 bis 500 mm.

Eine Möglichkeit, einen schnellen Austausch von dem Stoffgemisch auf dem Trennmedium Ph_{A} mit dem Stoffgemisch auf dem Trennmedium Ph_{B} und damit eine effiziente Equilibrierung zwischen den beiden Trennmedien zu erzielen besteht darin, mehrere Zylinderscheiben mit Ph_{A} und entsprechend viele Zylinderscheiben mit Ph_{B} von jeweils relativ geringer Dicke alternierend konzentrisch übereinander auf einer Achse zu stapeln. Bei sehr geringen Dicken der Zylinderscheiben ist dann ein genügend schneller Austausch über Diffusion ermöglicht. Bei dickeren Zylinderscheiben läßt sich so die Zeit, die für das Umwälzen des Zwischenraummediums und damit die Eqilibrierung zwischen den beiden Phasen Ph_{A} und Ph_{B} nötig ist, erheblich verkürzen. Die Anzahl der übereinander stapelförmig angeordneten Zylinderscheiben Z_{A} und Z_{B} beträgt vorzugsweise 2 bis 10000, und insbesondere 2 bis 200.

Alle Zylinderscheiben Z_{A} drehen gleichsinnig und im Normalfall gleich schnell, ebenso wie alle Zylinderscheiben Z_{B} gleichsinnig und im Normalfall gleich schnell, aber in entgegengesetzter Richtung drehen. Die Umdrehungs-geschwindigkeiten von Z_{A} and Z_{B} können voneinander verschieden sein, sind vorzugsweise aber die gleichen. Die Drehgeschwindigkeit beträgt vorzugs-weise 1 Upd bis 10 Upmin.

Die Effizienz des erfindungsgemäßen Verfahrens ("3-Phasen-Gegenstrom-Chromatographie") ist insbesondere von einem wirksamen Austausch des Zwischenraummediums und damit des Stoffgemisches zwischen den Trennmedien (Trennphasen) Ph_{A} und Ph_{B} abhängig. Dabei darf allerdings das zu äquilibrierende Substanzgemisch durch den Transport zwischen Ph_{A} und Ph_{B} nicht wesentlich in Richtung der Austragsorte der reinen Komponenten (ATO_{A} und ATO_{B}) transportiert werden.

Erfindungsgemäß ist es deshalb bevorzugt, die Zylinderscheiben Z_{A} und Z_{B} mit Strukturelementen zu füllen. Für die Ausbildung solcher Strukturelemente sind dabei insbesondere die zwei folgenden Ausführungsformen zweckmäßig:
(A) Die Füllung der Zylinderscheiben mit achsen-parallel angeordneten Sturkturelementen;
(B) Die Unterteilung der Zylinderscheiben Z_{A} und Z_{B} in im wesentlichen deckungsgleiche, konzentrisch in gleichmäßigem Abstand angeordnete Segmente, z.B. in Form von tortenförmigen oder kreisrunden Segmenten, wobei kreisrunde Segmente bevorzugt sind.

Beispiele für achsenparallel angeordnete Sturkturelemente, mit denen die Zylinderscheiben gefüllt werden, sind insbesondere Fasern und Stäbchen, vorzugsweise mit einem Durchmesser von 0.05 µm bis 5 mm, und insbesondere von 0.1 µm bis 1 mm, Kapillaren, dünne Rohre mit Löchern versehene Platten oder Gewebe, wie z.B. Glasfasergewebe oder - fritten, wobei der Innendurchmesser der Kapillaren, dünnen Rohre und Löcher dabei vorzugsweise 0.1 µm bis 10 mm, und insbesondere 1 µm bis 5 mm beträgt; im wesentlichen coplanar mit der Ebenenschar, die die Achse enthält, angeordnete Lamellen, wobei der Abstand benachbarter Lamellen, vorzugsweise 0.1 µm bis 10 mm, und insbesondere 0.5 µm bis 5 mm beträgt, und die Anzahl der Lamellen vorzugs-weise 5 bis 1.000.000, und insbesondere 24 bis 12000 ist.

Die Durchmesser der achsen-parallel angeordneten Strukturelemente (gemäß (A)), z.B. der Fasern oder Kapillaren, oder der Abstand benachbarter Lamellen werden dabei vorzugsweise so gewählt, daß die Möglichkeit einer seitlichen Abdrifft durch häufige Wechsel des Zwischenraummediums zwischen den Zylinderscheiben Z_{A} und Z_{B} klein gehalten werden kann; die seitliche Abdrift kann z.B. dann besonders hoch sein, wenn die achsen-parallel angeordneten Strukturelemente, z.B. die Kapillaren oder Lamellen, die Packungslücken in der angrenzenden Zylinderscheibe beim Darübergleiten nur unzureichend mit ihrem Durchmesser abdecken. Eine Möglichkeit zur Herstellung von Lochplatten besteht z.B. in einer seitlichen Verklebung (Ausfüllung der Zwischenräume) der achsen-parallel angeordneten Strukturelemente aneinander, z.B. durch Beschichtung mit einem Klebeharz usw. In der Regel sind die achsen-parallel angeordneten Strukturelement, wie z.B. Fasern, Stäbchen, Kapillaren und dünne Rohre, und die Lamellen mit den Sorptionsmitteln beschichtet; bei geeigneter Wahl der Sorptionsmittel können sie aber auch aus diesen bestehen.

Die vorstehend unter (B) genannten Strukturelemente in Form von Segmenten sind erfindungsgemäß besonders bevorzugt.

Die Anzahl der Segmente pro Zylinderscheibe beträgt vorzugsweise 2 bis 500, und insbesondere 4 bis 128.

Die Segmente können dabei mit den vorstehend unter (A) beschriebenen Strukturelementen, wie z.B. Fasern, Kapillaren und/oder Lamellen gefüllt sein, wobei hierbei eine achsen-parallele Anordnung zweckmäßig ist, oder durch körnige Trenn- und/oder Trägermaterialien, die aus den Sorptionsmitteln bestehe oder deren Oberfläche die Sorptionsmittel trägt.

Als Trägermaterialien und Trennmaterialien (Sorptionsmittel) für die unter (A) und (B) beschriebenen Strukturelemente und/oder deren Füllungen, kommen dabei im wesentlichen alle in der Chromatographie mit gepackten Säulen üblichen Träger- und Trennmaterialien in Frage, und insbesondere die in der PCT Anmeldung WO 92/16275 beschreibenen Träger- und Trennmaterialien. Besonders zweckmäßig sind körnige oder faserige Trägermaterialien, deren Oberfläche die Sorptionsmittel trägt.

Vorzugsweise sind die erfindungsgemäß verwendeten Träger- und Trenn-materialien etwas grobkörniger, als die in der konventionellen Säulen-chromatographie verwendeten Materialien, um eine leichte Durchströmbarkeit und damit kurze Equilibrierzeiten zu gewährleisten.

Erfindungsgemäß werden insbesondere Kieselgele, Sand, Diatomeenerde, gebranntes Tonmehl, Polymerpartikel, Polymerfasern, z.B. Baumwolle, Schurwolle, Nylonfasern, Glaswolle, Kapillarröhren, z.B. aus Glas oder organischen Polymeren und/oder Glaskugeln verwendet. Der Durchmesser der Kieselgele beträgt zweckmäßigerweise 5 bis 1000 µm, und insbesondere 10 bis 500 µm, der Durchmesser der verwenden Sande 20 bis 5000 µm, und insbesondere 50 bis 2000 µm; und der Durchmesser der Glaskugeln 10 bis 2000 µm, und insbesondere 20 bis 500 µm.

Die Drehung der Zylinderscheiben kann kontinuierlich oder diskontinuierlich erfolgen; die Wahl zwischen kontinuierlicher und diskontinuierlicher Drehung hängt insbesondere von der Ausgestaltung und Anordnung der Struktur-elemente ab: Bei einer Füllung der Scheiben mit achsen-parallel angeordneten Strukturelementen erfolgt die Drehung zweckmäßigerweise mit gleichbleiben-der Geschwindigkeit, d.h. also kontinuierlich, während bei der Verwendung von Segmenten (nach einer der vorstehend beschriebenen Ausführungsformen (B) eine diskontinuierliche Drehung nötig wird. In diesem Fall bleiben die Zylinderscheiben Z_{A} und Z_{B} während der Ruhephase (Equilibrierungsphase) unbewegt in einer Position auf einander ruhen, so daß die Segmente (Segmentwände) exakt übereinander liegen und dadurch alle Segmente oder Löcher durchgehende Kanäle durch den gesamten Stapel aus Zylinderscheiben Z_{A} und Z_{B} bilden. Eine ausreichende Dichtigkeit dieser Kanäle gegen die Nachbar-kanäle läßt sich dabei z.B. erzielen durch genügend breite Dichtungsflächen (Segmentwande) der Segmente, ein genugend kleines Spiel zwischen den Zylinderscheiben Z_{A} und Z_{B}, einen ausreichend niedrigen Druck im Transportmedium, und/oder durch spezielle Einrichtungen (O-Ring-Dichrungen, Gummi-, Silikon- oder Teflon®-Dichtungen, Anpreßdruck während der Equlibrier-phase, usw.) erreichen. Wenn die Zylinderscheiben Z_{A} und Z_{B} sehr viele Segmente enthalten, und dadurch notwendigerweise die Segmentwände dünner sind, so können an den Segmenträndern auch elastische Lippen oder Dichtungen usw. angebracht sein.

Das zu trennende Stoffgemisch wird zweckmäßigerweise über ein geeignetes Auftragssystem eingebracht, z.B. einen Luftstrom, der mit einer definierten Menge an gasförmigem, zu trennendem Stoffgemisch beladen ist, was z.B. erreicht werden kann durch eine mit Raschigringen gefüllte Säule, die von oben nach unten mit flüssigem, zu trennendem Stoffgemisch bei einer definierten Temperatur durchrieselt wird und die von unten nach oben mit einer definierten Menge Luft pro Zeit durchströmt wird. Der Austrag der Komponenten (Fraktionen) des aufgetrennten Stoffgemisches von den Sorptionsmitteln erfolgt zweckmäßigerweise durch ein geeignetes Austragssystem, z.B. Gasstrom, in den hinein die aufgetrennten Komponenten von der Adsorptions-oberfläche weg verdampft werden und aus dem sie durch eine (oder evtl. mehrere hintereinandergeschaltete) Kühlfalle(n) auskondensiert werden.

Obwohl prinzipiell als Auftrags- und Austragssystem eines der in der WO 92/16275 beschriebenen Verfahren und Vorrichtungen verwendet werden kann, werden erfindungsgemäß zweckmäßigerweise als Teil von Ein- und/oder Austragssystemen ruhende Zylinderscheiben (191, 192) verwendet.

So können z.B. zwischen den einzelnen Zylinderscheiben Z_{A} und Z_{B} des Zylinderstapels Einstragszylinderscheiben (191) und Austragszylinderscheiben (192) eingebaut werden. Diese weisen die gleiche Segmentiergung wie die Zylinderscheiben Z_{A} und Z_{B} auf, sind aber nicht mit Sorptionsmittel (Trennmaterial) gefüllt und/oder belegt und werden während der Trennung nicht bewegt. Die Segmente von (191) und (192), über die das Substanzgemisch mit dem Zwischenraummedium ein-, bzw. ausgeführt wird, also die Segmente zwischen den Ein- und Austragsorten sperren den freien Durchgang eines Segmentes von Zylinderscheibe Z_{A} zu seinem gegenüberliegenden Segment von Zylinderscheibe Z_{B} und sind mit Ein- bzw. Auslaßstutzen versehen. So kann jedes Ein- bzw. Austrags-Segment von (134) und (135) einzeln befüllt oder entleert werden. Alle anderen Segmente der Scheiben (191, 192) leiten das Zwischenraummedium mit dem Trenngut jeweils von einem Segment der Zylinderscheibe Z_{A} in sein gegenuberliegendes Segment der Zylinderscheibe Z_{B}

Für eine bessere Auftrennung des Komponentengemisches, z.B. aus den Komponenten A und B, ist es erfindungsgemäß bevorzugt, dem Segment, das dem Austragsort ATO_{A} der Komponente A gegenüberliegt, und/oder dem Segment, das dem Austragsort ATO_{B} der Komponente B gegenüberliegt, die Komponente A und/oder die Komponente B zuzuführen.

Während z.B. die Komponente A des aufgetrennten Gemisches aus A + B am Austragsort ATO_{A} von der Zylinderscheibe Z_{A} (Trennmedium Ph_{A}) ausgetragen wird, kann gleichzeitig das gegenüberliegende Segment der Zylinderscheibe Z_{B} mit dem Trennmedium Ph_{B} teilweise mit der Komponente A beladen werden. Für den Austragsort ATO_{B} gilt Analoges. Mit dieser Ausführungsform lassen sich die folgenden Effekte erzielen:
1. Nivellierung der Beladung über die gesamte Trennstrecke: Ohne Endein-speisung der Komponenten A und/oder B ist die Konzentration auf Ph_{A} und Ph_{B} gegen Ende der Trennstrecke deutlich niedriger als am Anfang. Dieser Effekt ist besonders ausgeprägt bei geringen Besetzungsunterschieden, was sich auf folgende Weise erklären läßt: Wenn in der Mitte Ph_{A} und Ph_{B} zu je 100% mit einem Gemisch von 50% A und 50% B beladen sind so können allein durch den letzten Verteiungsschritt bei einem Verteilungskoeffizienten α (Menge Komponente A auf Einheitsvol. Ph_{A} : Menge Komponente A auf Einheitsvolumen Ph_{B}) von 0.52 nur 52% des in der Kammer vorher (ATO_{A} -1) vorandenen A ausgetragen werden, wenn die Substanz im vorletzten Schritt annähernd 100% rein war. Tatsächlich läßt sich für α = 0.52 bei fünf Verteilungsschritten (n = 5) von der Mitte ETO_{A} - ETO_{B} bis zur Entnahme ATO_{A} ein Belegungsverhältnis zwischen den Adsorptionsphasen der Kammern Mitte/Austrag von 5.0/l berechnen; für α = 0.55 ein Verhältnis von 3.8/l; für α = 0.60 ein Verhältnis von 2.7/l. Durch die Endeinspeisung der Komponenten A und/oder B in EEO_{A} und/oder EEO_{B} wird dieser Konzentationsabfall verhindert und die Beladung der Trennphasen bleibt über die gesamte Trennstrecke weitgebend konstant. Dadurch läßt sich über die gesamte Trennstrecke eine optimale Beladung der Trennphasen erreichen.
2. Verbesserung des Verteilungskoeffizienten α bzw. β (sogennanter "Displacement-Effekt"): Wählt man die eingespeiste Menge an Komponente A so, daß nahezu alle auf Ph_{A} noch vorhandenen, für Komponente A energetisch bevorzugten Plätze von Komponente A besetzt wurden, so konkurriert ein geringer, darüber hinaus zugegebener Uberschuß an Komponente A mit der Komponente B um die für Komponente A energiegunstigeren Plätze und verdrangt Komponente B weiter von der Trennphase Ph_{A} ("displacement effect"), dies gilt besonders für Trennphasen mit diskreten Adsorpions- oder Inklusions-plätzen, z.B. für Cyclodextrine usw.

Beide Effekte (1) und (2) zusammen ergeben eine deutlich höhere Trenn-leistung und eine deutlich verbesserte Trennwirkung. Mathematische Berechnungen weisen z.B. für α = 0.51 bei 5 Verteilungsschritten von der Mitte bis zum Austrag (n = 5) eine erhebliche Steigerung der Reinheit aus.

Vorzugsweise wird zur Zuführung der reinen Komponenten A und /oder B ein Teil der dem Austragssystem entnommenen Menge an Komponente A und/oder B zur Endeinspeisung rückgeführt.

Als Sorptionsmittel können in der Regel die gleichen Sorptionsmittel, wie sie auch nach dem Verfahren der PCT-Anmeldung WO 92/16275 eingesetzt werden, verwendet werden Diese Sorptionsmittel unterscheiden sich z.B. hinsichtlich ihrer Polarität, geometrischen Anordnung von bindenden Funktionen, Porengröße, Viskosität, Temperatur und/oder elektrischer Ladung.

In einer Ausführungsform des erfindungsgemäßen Verfahrens kann die Temperatur der Sorptionsmittel verschieden sein und/oder ein Temperatur-gradient in Richtung der Trennstrecke vorliegen

Die Trennleistung eines aus den Zylinderscheiben Z_{A} und Z_{B} gebildeten Zylinderstapels ist direkt proportional zur Zeit, die für die Equilibrierung zweier Systeme benötigt wird. Obwohl für Zylinderscheinen mit einer nur geringen Höhe (insbesondere von 0.1 bis 2 mm) ein Austausch mittels Diffusion möglich ist, ist es erfindungsgemäß bevorzugt, die Equilibrierzeit durch geeignete Einrichtungen, mit denen das Zwischenraummedium (Transportphase) in achsen-paralleler Richtung bewegt werden kann, erheblich zu verkürzen.

Es ist deshalb erfindungsgemäß bevorzugt, die Strömung des Zwischenraummediums mittels eines Umwälzsystems (136) herzustellen. Prinzipiell lassen sich erfindungsgemäß auch Umwälzsysteme verwenden, wie sie auch nach dem Verfahren der PCT-Anmeldung WO 92/16275 eingesetzt werden. Dies gilt auch für andere, den Verfahrens- und Vorrichtungsmerkmalen in der WO 92/16275 entsprechende Merkmale, wie z.B. Sorptionsmittel Ein- und Austragssysteme.

Erfindungsgemäß bevorzugt sind folgende Umwälzsysteme:

### (A) Offene Systeme

Ist die Anzahl an Zylinderscheiben Z_{A} und Z_{B} groß und die Konzentration an Trenngut im Zwischenraummedium relative klein, kann gegebenenfalls auf ein geschlossenen Umwälzsystem verzichtet werden; es kann dann die axiale Bewegung des Zwischenraummediums durch einfaches Beaufschlagen von einer Seite oder abwechselnd von der einen und der anderen Seite des aus den Zylinderscheiben Z_{A} und Z_{B} gebildeten Stapels mit einem einzigen gleichmäßigen Strom des Zwischenraummediums erreicht werden. Damit entfällt z.B. die Notwendigkeit vieler paralleler Pumpkreisläufe. Für diesen Fall werden allerdings an den Enden zusätzliche Zylinderscheiben Z_{A} und Z_{B} benötigt, wenn man das über die letzte Zylinderscheibe Z_{A} und Z_{B} hinaus wandernde Trenngut zurückhalten will. An den Enden ist dann außerdem mit einem Konzentrations-gefälle zu rechnen, das das Trennergebnis erheblich verschlechtern kann.

### (B) Geschlossene Systeme

Als geschlossene Systeme können erfindungsgemäß verwendet werden:
(a) sogenannte oszillierende Systeme, wie z.B. eine Gummilamellenpumpe, wie sie nachfolgend beschrieben wird.
(b) zirkukerende Systeme.

Als zirkulierendes System wird erfindungsgemäß vorzugsweise eine Reibungspumpe durch den Schlitz einer rotierenden Doppelscheibe (Doppelscheibenspalt-Reibungspumpe) wie sie nachstehend beschrieben wird, verwendet.

Eine solche Pumpenkonstruktion wird vorzugsweise dann verwendet, wenn viele einzeine Segmente der Zylinderscheiben Z_{A} und Z_{B} gegen eine nur geringe Druckdifferenz umzuwälzen sind. Daneben kommen also zirkulierende Systeme aber auch an sich bekannte Pumpenkonstruktionen in Betracht, wie z.B. Kolben- oder Membranpumpen, die auch von einer gemeinsamen Kurbelwelle aus betrieben werden können, oder Schlauchquetschpumpen.

Es ist auch möglich, das Verfahren in einer simulierten Gegenbewegung mittels einer geeigneten Ventilsteuerung durchzuführen.

Die Aufeinanderfolge mit der die einzelnen Strukturelemente, z.B. Segmente zweier oder mehrerer Zylinderscheiben Z_{A} und Z_{B} durch die gegensinnige Drehrichtung von Z_{A} und Z_{B} übereinander zu liegen kommen und jeweils miteinander äquilibriert werden, kann prinzipiell nämlich durch eine geeignete Ventilsteuerung zwischen Gefäßen mit Trennmedium Ph_{A} und Gefäßen mit Trennmedium Ph_{B} simuliert werden.

Das erfindungsgemäße Verfahren ist dann dadurch gekennzeichnet, daß man die einzelnen Segmente der drehenden Zylinderscheiben Z_{A} und Z_{B} (134, 135) durch entsprechende fest installierte, die Trennmedien Ph_{A} und Ph_{B} enthaltende Gefäße (231, 232) ersetzt, und die gegenläufige Drehbewegung durch eine geeignete Ventilsteuerung zwischen den Gefäßen mit Trennmedium Ph_{A} und den Gefäßen mit Trennmedium Ph_{B} simuliert.

Man arbeitet dann also mit einer Serie fest installierter Gefäße mit Ph_{A} (231) und mit einer Serie fest installierter Gefäße mit Ph_{B} (232). Die fest installierten Gefäße mit Ph_{A} und Ph_{B} bestehen zB. aus einem für das Zwischenraummedium durchlässigen Hohlzylinder (262), gefüllt mit dem Trennmedium Ph_{A} bzw. Ph_{B}, der sich innerhalb eines Rohres (265) mit etwas größerem Durchmesser befindet. Hohlzylinder und äußeres Rohr sind gleich lang und beide Rohrenden sind mit je einem Deckel verschlossen, wobei der eine in der Mitte eine Zuleitung in das Innere (261) des Hohlzylinders aufweist, der andere einen Auslaß zwischen Hohlzylinderaußenwand und Rohrinnenwand, so daß das Zwischenraummedium mit dem Trenngut in das Innere des Hohlzylinders mit Ph_{A} bzw. Ph_{B} zugeführt wird, diesen radial durchströmt und danach durch den Spalt (263) zwischen äußerem Rohr und Hohlzylinder abgeleitet wird.

Auf diese Weise wird erreicht, daß das Zwischenraummedium eine relativ dünne, im wesentlichen überall gleich dicke Schicht von Ph_{A} durchströmt, bevor es wieder mit der Gegenphase Ph_{B} im Hohlzylinder des gerade mit dem Hohlzylinder mit Ph_{A} equilibrierten Gefäßes mit Ph_{B} in Kontakt kommt und aber gleichzeitig die Menge an Trennmedium Ph_{A} bzw. Ph_{B} mit dem Durchmesser und der Höhe des Hohlzylinders nahezu beliebig vergrößert werden kann.

Die fest installierten Gefäße werden vorzugsweise mit einer "Ventilmatrix" oder mit einem erfindungsgemäßen "3-Scheiben-Gegenstrom-Simulations-ventil" (234) in der korrekten Aufeinanderfolge miteinander equilibriert.

Unter "Ventilmatrix" ist zB. eine Doppelmatrix (eine für die Hin-, dazu parallel geschaltete für die Rückleitungen der einzelnen Kreisläufe) von je n² 3-Wege-Ventilen zu verstehen, um die n einzelnen, fest installierten Gefäße mit Ph_{A} mit den n fest installierten Gefäßen mit Ph_{B} zu equilibrieren, mit weiteren 4n 4-Wege-Ventilen, um den Ein- und Austrag zu bewerkstelligen. Dabei ist zB. jede Hinleitung sowie parallel dazu jede Rückeitung eines jeden Gefäßes mit Ph_{A} mit n hintereinander geschalteten 3-Wege-Ventilen (vom letzten 3-Wege-Ventil der so gebildeten Ventilkette eines Gefäßes mit Ph_{A} wird nur ein Ausgang benötigt) verbunden, deren zweiter Ausgang jeweils mit den Hin- bzw. Rückleitungen der Gefäße mit Ph_{B} verbunden in und je ein weiteres 4-Wege-Ventil in jeder Hin- und Rückleitung zu den Gefäßen mit Ph_{A} bzw. Ph_{B} für den Ein- und Austrag dazwischengeschaltet ist.
Durch geeignete Schaltlogiken läßt sich die nötige Gesamtzahl an Ventilen (vgl. oben: 2n² + 4n) noch erheblich reduzieren. Verwendet man anstelle von 3-Wege-Ventilen (d.h. 1 Eingang, 2 Ausgänge) Ventile mit 3 oder noch mehr Ausgängen, so läßt die sich die Zahl der insgesamt benötigten Ventile weiter drastisch senken.

"3- Scheiben-Gegenstrom-Simuiations-Ventil":
Das Ventil besteht aus drei konzentrisch aufeinander liegenden, ringförmigen Scheiben (241, 242) die deckungsgleich, konzentrisch in gleichmäßigem Abstand angeordnet eine gleiche Anzahl von je zwei benachbarten Löchern ("Doppellöchern") aufweisen, wobei die Doppellöcher (243) der beiden äußeren Scheiben (241) des so gebildeten 3-Scheiben-Zylinders auf ihren Außenseiten über jeweils eine Zu-und Rückleitung (245) mit den fest installierten Gefäßen verbunden sind und wobei an die eine Außenscheibe alle Gefäße mit dem Trennmedium Ph_{A} angeschossen sind, an die andere Außen-scheibe alle Gefäße mit dem Trennmedium Ph_{B}.

Die Doppellöcher der beiden äußeren Scheiben sind auf ihren Außenseiten so mit geeigneten Leitungen (zB. elastischen Schläuchen) verbunden, daß eine Rotation dieser Scheiben um die Achse des Drei-Scheiben Zylinders in beide Richtungen um jeweils 180° möglich ist. Für jeden Equilibrierschritt werden die beiden Außenscheiben nun um z.B. jeweils eine Lochposition (oder mehrere, ggfs. die eine Außenscheibe auch um eine von der anderen Außenscheibe verschiedene Anzahl an Lochpositionen) in entgegengesetzter Richtung weitergedreht, wahrend die Mittelscheibe mit den Ein- und Auslaßanschlüssen (256) nicht bewegt wird.

Die Doppellochreihe der Mittelscheibe (254) verbindet die Doppellochreihen der Außenscheiben mit Ausnahme der Doppellöcher, an denen eine Ein- oder Austrag aus den fest installierten Gefäßen erfolgen soll. In diesen Löchern ist der Durchgange ca. in der Mitte gesperrt und stattdessen sind die so gebildeten Hülsenenden (258) mit jeweils einem radial in der Scheibenebene liegenden Schlauchanschluß (256) versehen.

Die Abdichtung der drei Scheiben in einer Position in der die Doppelloch-reihen übereinander liegen, erfolgt zweckmäßigerweise über O-Ring-Dichtun-gen (255) um die einzelnen Löcher (251) oder andere, an sich bekannte Dichtverfahren. Die Außenscheiben werden nun zB. für jeden Equilibrierschritt um jeweils eine Lochposition gegensinnig weitergedreht, wobei jede beliebige Drehposition der Außenscheiben dargestellt werden kann durch eine Drehung der Scheiben von 0-180° in die eine oder andere Richtung. Die mittlere Scheiben wird im Normalfalle nicht bewegt.

Prinzipiell kann die Mittelscheibe auch ersetzt werden durch geeignete Ventile (zB. 4-Wege-Ventile), die in die Hin- und Rückleitungen zu den fest installierten Gefäßen eingebaut sind, und eine geeignete Schaltlogik für diese Ein- und Austragsventile. Die verwendete Ventilsteuerung besteht dann also aus einem "2-Scheiben-Gegenstrom-Simulations-Ventil", nämlich den beiden Außenscheiben des "3-Scheiben-Gegenstrom-Simulations-Ventils", und 2n 4-Wege-Ventilen für die Leitungen zu den n Gefäßen mit Ph_{A} und 2n 4-Wege-Ventilen für die Leitungen zu den n Gefäßen mit Ph_{B} nebst zugehöriger Schaltlogik.

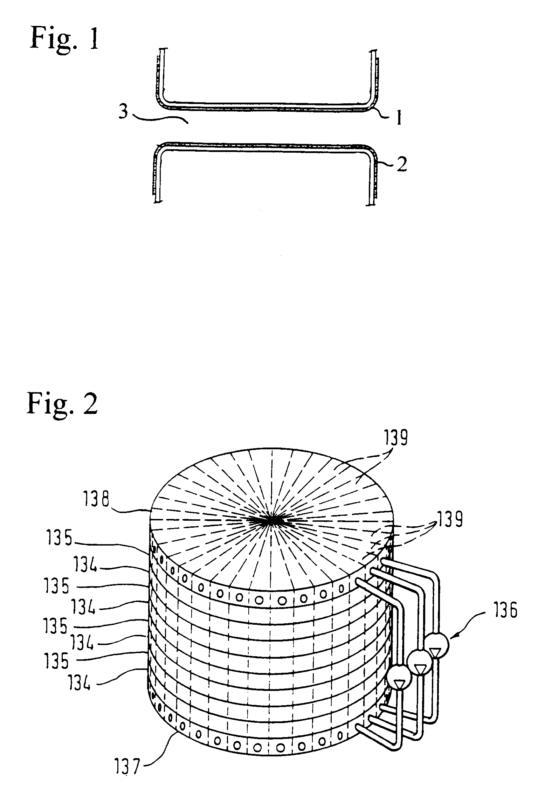

Diese Anordnungen erlauben eine exakt gleiche Equilibrier-, Ein- und Austragsabfolge für fest installierte Gefäße, wie sie vorher in den Figuren 2, 8, und 11 für rotierende Segmente dargestellt wurde.

Die erfindungsgemäße Ausführungsform mit fest installierten Gefäßen und er simulierten Gegenbewegung eignet sich insbesondere für Trennungen in größerem Maßstab und solche, für die eine Unterteilung der Zylinderscheiben Z_{A} und Z_{B} in eine geringere Anzahl an Strukturelementen, z.B. Segmenten, ausreicht. Sie hat darüberhinaus den Vorteil, daß mit vergleichsweise geringem technischen Aufwand die Gefäße, die Ph_{A} enthalten, auf einer Temperatur T_{A} und die Gefäße, die Ph_{B} enthalten, auf einer (ggfs. von T_{A} verschiedenen) Temperatur T_{B} gehalten werden können, zB. indem in die Verbindungswege der Gefäße mit Ph_{A} zu denen mit Ph_{B} geeignete Wärmeaustauscher (235) eingebaut sind.

Für das erfindungsgemäße Verfahren der simulierten Gegenbewegung arbeitet man insbesondere mit einem wie vorstehend unter (B) (b) beschriebenen zirkulierenden System, z.B. unter Verwendung einer der dort beschriebenen Pumpen.

Auch im Falle des erfindungsgemäßen Verfahrens einer simulierten Gegenbewegung kann zur Erhöhung der Trennleistung und Verbesserung der Trennwirkung von dem vorstehend beschriebenen "displacement effect" durch eine Endeinspeisung der reinen Komponenten oder von an den reinen Komponenten angereicherten Gemischen Gebrauch gemacht werden.

Gegenstand der Erfindung ist auch eine Vorrichtung zur Durchführung des erfindungsgemäßen Verfahrens. Die erfindungsgemäße Vorrichtung ist dadurch gekennzeichnet, daß sie mindestens zwei oder mehrere hohle, mit Strukturelementen gefüllte, konzentrisch übereinander angeordnete Zylinderscheiben Z_{A} und Z_{B} (134, 135) umfaßt, die die aus den Sorptionsmitteln (1, 2) bestehenden oder diese enthaltenden Trennmedien Ph_{A} und Ph_{B} enthalten, wobei jeweils benachbarte Zylinderscheiben Z_{A} und Z_{B} alternierend angeordnet sind und sich um eine gemeinsam Achse gegenläufig zueinander bewegen, und Eintragseinrichtungen (191) zur Zuführung des zu trennenden Stoffgemisches und Austragseinrichtungen (192) zur Gewinnung der aufgetrennten Fraktionen des Gemisches.

Zweckmäßige Ausgestaltungen der erfindungsgemäßen Vorrichtung sind bereits vorstehend im Zusammenhand mit der Verfahrensdurchführung beschrieben.

Es wird eine neue Gummilamellen-pumpe gezeigt, wie sie erfindungsgemäß für eine vorstehend beschriebenes geschlossenes System von Umwälzeinrichtungen verwendet werden kann.

Die Gummilamellenpumpe umfaßt einen Zylinder (201) aus dünnem, elastischem Wandmaterial und ein inneres Achsenrohr (202), wobei die äußere Wand des inneren Achsenrohres mit der elastischen Zylinderwand (203) und der Stirnwand (204) durch elastische Lamellen (205) verbunden ist.

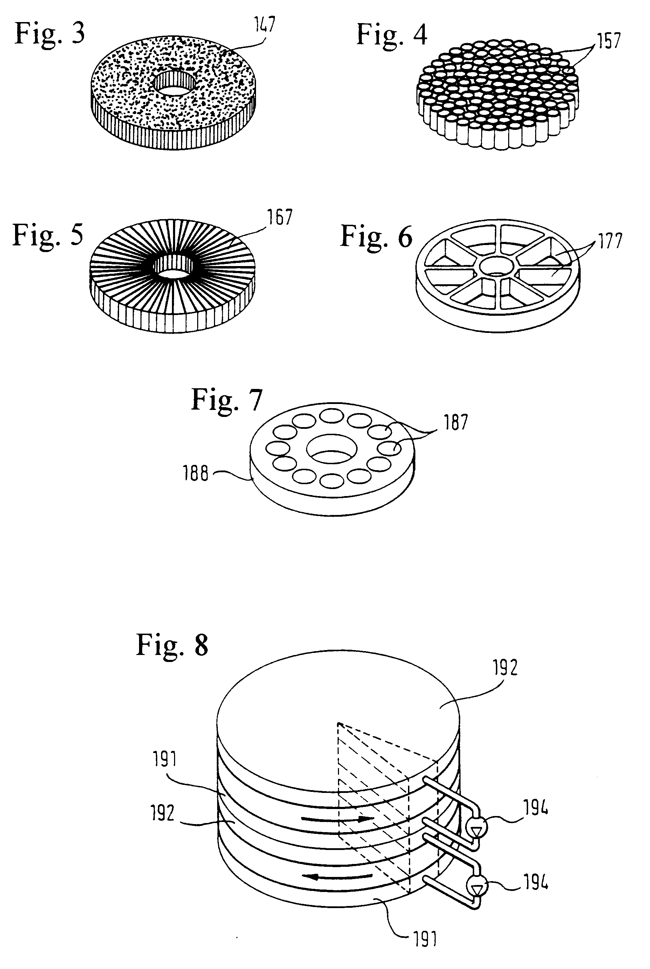

Der gesamte elastische Körper der Gummilamellenpumpe wird dadurch in viele, im wesentlichen gleich große, gas- und/oder flüssigkeitsdichte Segmente eingeteilt, die nur an der Unterseite zum aus den Zylinderscheiben Z_{A} und Z_{B} gebildeten Zylinderstapel hin offene Schlitze aufweisen. Falls die Zylinder-scheiben z.B. eine Segmentierung, wie z.B. in Fig. 6 aufweisen, sind die Segmente der Gummilamellenpumpe vorzugsweise deckungsgleich ausge-stattet. Vorzugsweise befindet sich an beiden Enden des Zylinderstapels eine solche Gummilamellenpumpe. Duch gegensinniges Verdrehen der äußeren Stirnflächen der Gummilamellenpumpen werden die Lamellenvolumina jeweils etwas verkleinert, durch Zurückdrehen dann wieder vergrößert. Dadurch kann eine oszillierende Bewegung des Zwischeraummediums erreicht werden.

Die Gummilamellenpumpen eignen sich insbesondere für ein erfindungsgemäße Verfahren bzw. eine erfindungsgemäße Vorrichtung zur Trennung eines Stoffgemisches, bei dem/der das Volumen des Zwischenraum-mediums pro Zylinderscheibe Z_{A} bzw. Z_{B} klein ist im Vergleich zum einzelnen Lamellenvolumen in der Gummilamellenpumpen. Die erfindungsgemäße Gummilamellenpumpen wird deshalb bevorzugt bei sehr kleinen Höhen der Zylinderscheiben Z_{A} und Z_{B} eingesetzt. Sie wird außerdem bei einer Unterteilung der Zylinderscheiben Z_{A} und Z_{B} in sehr viele Strukturelemente, insbesondere Segmente, eingesetzt.

Als Materialien für die erfindungsgemäße Gummilamellenpumpen kommen ausreichend elastische Materialien in Frage, die gegenüber den durch die Zylinderscheiben Z_{A} und Z_{B} strömenden Medien vorzugsweise inert sind, wie z.B. Gummi.

Weiter wird eine neue Reibungs-pumpe durch den Schlitz einer roterenden Doppelscheibe (Doppelscheiben-spalt-Reibungspumpe) gezeigt.

Die Doppelscheibenspalt-Reibungspumpe umfaßt eine Doppelscheibe (211) mit engem Schlitz (212), die auf einer Welle (213) gelagert ist, und die auf beiden Seiten von einem enganliegenden Gehäuse (214) umschlossen ist, und eine Abstreifvorrichtung (215) aufweist, die in den Schlitz (212) bis zur Welle (213) hineinragt und zwischen den rotierenden Scheiben mit einem möglichst geringen Spiel schließt, und worin vor und hinter der Abstreifvorrichtung (215) Einlaßstutzen (216) und Auslaßstutzen (217) angebracht sind. Die Breite der Doppelscheibenspalt-Reibungspumpen kann sehr gering sein, und beträgt vorzugsweise 3 bis 100 mm; durch diese geringe Breite lassen sich deshalb auf der gleichen Welle viele Doppelscheibenspalt-Reibungspumpen anbringen, und dieser Pumpentyp ist deshalb besonders geeignet für das gleichzeitige Umwälzen aller Segmente oder fest installierter Gefäße mit großen Volumina an Zwischenraummedium gegen eine geringe Druckdifferenz.

Als Materialien für die Doppelscheibenspalt-Reibeungspumpe kommen insbesondere in Frage: Metallwerkstoffe wie Stahl, Messing, Aluminium etc.

Nachfolgend werden zweckmäßige Ausgestaltungen der Erfindung unter Bezugnahme auf die Zeichnung beispielhaft beschrieben, ohne die Erfindung darauf zu beschränken.

Die Fig. 1 zeigt die schematische Darstellung einer Vorrichtung im Querschnitt. Der Trennraum (3) befindet sich zwischen den Oberflächen der Sorptionsmittel (1) und (2).

Die Fig. 2 zeigt dine schematische perspektivische Darstellung erfindungsgemäßen Vorrichtung. Übereinander angeordnete Zylinderscheiben Z_{A} und Z_{B} (134, 135), die die Trennmedien Ph_{A} und Ph_{B} enthalten, sind alternierend angeordnet und um eine gemeinsame Achse gegenläufig zueinander drehbar, die Eintragsscheibe (137) und Austragsscheibe (138) werden nicht bewegt; die Vorrichtung enthält Umwälzsystem (136), wobei jedem Segment (139) ein Umwälzsystem (136) zugeordnet ist.

Die Fig. 3 zeigt eine erfindungsgemäße Ausführungsform in der die in den Zylinderscheiben vorhandenen Strukturelemente die Form von Fasern und/oder Stäbchen (147) besitzen.

Die Fig. 4 zeigt eine erfindungsgemäße Ausführungsform, bei der die Strukturelement die Form von Kapillaren oder dünnen Rohren (157) besitzen.

Die Fig. 5. zeigt eine erfindungsgemäße Ausführungsform, bei der die Strukturelemente in Form von Lamellen (167) ausgebildet sind.

Die Fig. 6 zeigt eine erfindungsgemäße Ausführungsform, bei der die Strukturelemente in Form von tortenförmigen Segmenten (177) ausgebildet sind.

Die Fig. 7 zeigt eine erfindungsgemäße Ausführungsform, in der die Strukturelemente in Form von kreisrunden Segmenten (187) in den Zylinderscheiben (188) ausgebildet sind.

Die Fig 8 zeigt die schematische Darstellung einer erfindungsgemäßen Vorrichtung mit als ruhende Zylinderscheiben ausgebildeten Eintrags- (191) und Austragsystemen (192). Die Zylinderscheiben (191), die einen Teil des Eintragssystems darstellen, sind mit den Zylinderscheiben (192), die einen Teil des Austragssystems darstellen, über die Umwälzsysteme (194) verbunden.

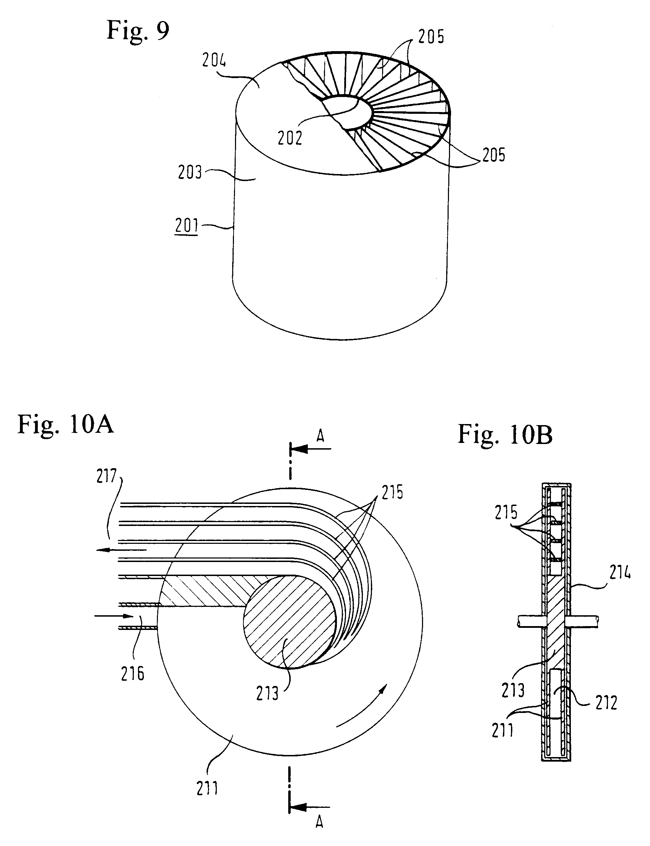

Die Fig. 9 stellt eine schematische Darstellung einer Gummilamellenpumpe in perspektivischer Ansicht dar. Die Gummilamellenpumpe umfaßt einen Zylinder (201) aus dünnen, elastischem Wandmaterial und ein inneres Achsenrohr (202), wobei die äußere Wand des inneren Achsenrohres mit der elastischen Zylinderwand (203) und der als Abschlußwand fungierenden Stirnwand (204) durch eine Vielzahl elastischer Lamellen (205) verbunden ist.

Die Fig. 10A zeigt die schematische Darstellung einer Doppelscheibenspalt-Reibungspumpe in Draufsicht, die Fig. 10B eine schematische Darstellung im Schnitt der Ebene A-A der Fig. 10A. Eine Doppelscheibe (211) mit engem Schlitz (212) ist auf einer Weile (213) gelagert, und wird auf beiden Seiten und zylindrisch um den Doppelscheibenumfang von einem eng anliegenden Gehäuse (214) umschossen, das eine Abstreifvorrichtung (215) aufweist, die in den Schlitz (212) bis zur Welle (213) hineinragt und zwischen den roterenden Scheiben mit einem möglichst geringen Spiel schließt, und worin vor und hinter der Abstreifvorrichtung Einlaßstutzen (216) und Auslaßstutzen (217) angebracht sind.

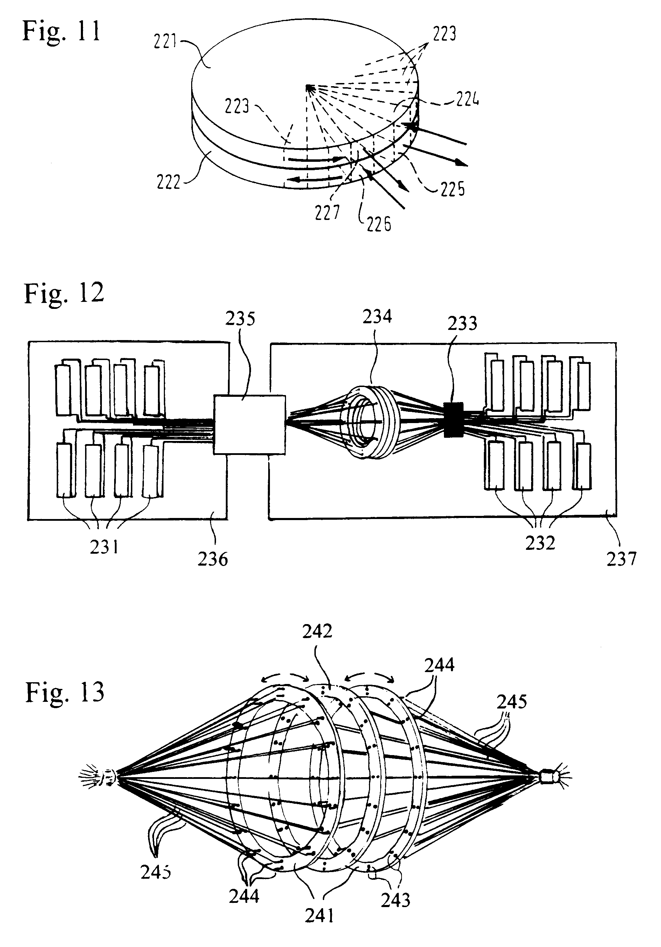

Die Fig. 11 ist eine schematische Darstellung eines erfindungsgemäß verwendeten Endeinspeisungssystems in perspektivischer Darstellung; eine Zylinderscheibe (221) mit dem Trennmedium Ph_{A} ist einer in gegenläufiger Richtung drehenden Zylinderscheibe (222) mit dem Trennmedium Ph_{B} benachbart. In die Zylinderscheibe (221) wird die Komponente B (vorzugsweise als reine Komponente B) in das Segment (224) (= Eintragsort ETO_{B}), das dem Austragsort ATO_{B} (225) der Komponente B gegenüberliegt, eingespeist, und der Zylinderscheibe (222) im entsprechenden, darunter-liegenden Segment (225) (= Austragsort ATO_{B}) die reine Komponente B entnommen. In gleicher Weise wird der Zylinderscheibe (222) die Komponente A (vorzugsweise als reine Komponente A) über den Eintragsort ETO_{A} (226) zugeführt, und der Zylinderscheibe (221) aus dem entsprechenden darüberliegenden Segment (227) (= Austragsort ATO_{A}) die reine Kompo-nente A entnommen. Die schematische Darstellung zeigt eine Vielzahl von Verteilungsschritten (Segmenten) (223) für die Komponente A und die Komponente B.

Fig. 12 ist eine schematische perspektivische Darstellung einer erfindungs-gemäßen Trennanlage mit fest installierten Gefäßen mit Ph_{A} (231) und Ph_{B} (232), Umwälzpumpen (233), einem "3-Scheiben-Gegenstrom-Simulations-Ventil" (234) und einem System von Wärmeaustauschern (235). Das Zwischenraummedium wird jeweils mittels einer Umwälzpumpe (233) in den einzelnen geschlossenen Kreisläufen zwischen jeweils einem fest installierten Gefäß mit Ph_{A} (231) und einem fest installierten Gefäß mit Ph_{B} (232) über das "3-Scheiben-Gegenstrom-Simulations-Ventil" (234) und über einen Wärmeaustauscher (235) umgepumpt. Nachdem aufdiese Weise je ein Gefäß mit Ph_{A} mit je Gefäß mit Ph_{B} equilibriert wurde, werden die Außen-scheiben des "3-Scheiben- Gegenstrom-Simulations-Ventils" jeweils um zB. eine Doppellochposition weitergedreht, um dann das Zwischen-raummedium in den so erhaltenen neuen, einzelnen Kreisläufen zwischen je einem Gefäß mit Ph_{A} und einem Gefäß mit Ph_{B} erneut umzuwälzen. Dabei können die fest installierten Gefäße mit Ph_{A} im Bereich (236) über das zwischen den Gefäßen mit Ph_{A} und den Gefäßen mit Ph_{B} eingebaute System von Wärmeaustauschern auf einer Temperatur T_{A}, die Gefäße mit Ph_{B} im Bereich (237) aufeiner Temperatur T_{B} gehalten werde. Die so erzeugte Equilibrierabfolge von je einem Gefäß mit Ph_{A} und je einem Gefäß mit Ph_{B} entspricht der durch Equilibrierung der einzelnen Segmente zweier sich in entgegengesetzter Richtung drehender Zylinderscheiben erhaltenen Abfolge.

Fig. 13 ist eine schematische perspektivische Darstellung eines erfindungs-gemäßen "3-Scheiben-Gegenstrom-Simulations-Ventils". Die Darstellung zeigt die beiden Außenscheiben (241) sowie die Mittelscheibe (242) mit ihren deckungsgleich in gleichmäßigem Abstand konzentrisch angeordneten Doppellöchern (243). Die Doppellöcher der Außenscheiben sind auf ihren Außenseiten über Anschlußstutzen (244) jeweils so mit der durch elastische Schläuche gebildeten Zu- und Rückleitung (245) zu einem fest installierten Gefäß verbunden, daß eine Drehung der Außenscheiben um 180° in beide Richtungen möglich ist. In jeder Equilibrierposition liegen die Löcher aller drei Scheiben übereinander und bilden so die gewünschten Kanäle. Der Abstand zwischen den drei Scheiben wurde zur Verdeutlichung extrem vergrößert dargestellt. In Wirklichkeit liegen die Scheiben aufeinander.

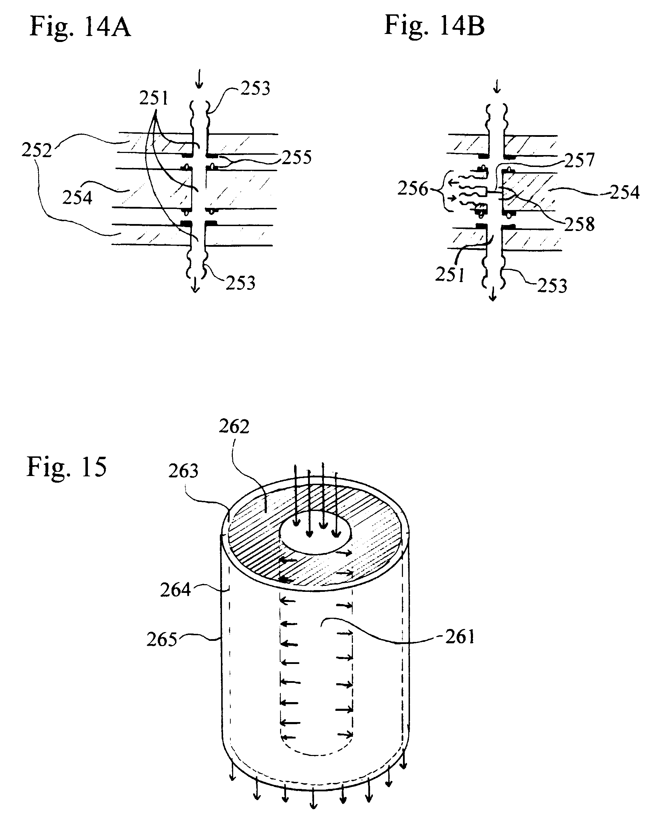

Fig. 14 ist eine schematische Darstellung von Bohrungen im "3-Scheiben-Gegenstrom-Simulations-Ventil" im Querschnitt. Fig. 14a zeigt jeweils ein Loch (251) in den beiden Außenscheiben (252) mit den Anschlußstutzen (253) (z.B. Schlaucholiven) und ein Loch (251) in der Mittelscheibe (254) im Querschnitt. Die Abdichtung erfolgt z.B. über eine geeignete O-Ring-Konstruktion (255).

Fig. 14b zeigt jeweils ein Loch (251) in den beiden Außenscheiben und ein Ein-/Austragsstück (256) in der Mittelscheibe (254) mit den Anschlußstutzen (253) (zB. Schlaucholiven) im Querschnitt. Das Ein-/Austragsstuck (256) sperrt den Durchgang durch die Mittelscheibe (254) über die Absperrung (257) ca. in der Mitte. Die so gebildeten Hülsenenden (258) sind jeweils über Anschlußstutzen (253) (zB. Schlaucholiven) mit den Ein- bzw. Austragsleitungen verbunden. Der Abstand zwischen den drei Scheiben wurde zur Verdeutlichung extrem vergrößert dargestellt. In Wirklichkeit liegen die Scheiben aufeinander.

Fig. 15 ist eine schematische perspektivische Darstellung eines erfindungsgemäßen fest installierten Gefäße. Das Zwischenraummedium wird in das Innere (261) des Hohlzylinders (262) mit dem Trennmedium Ph_{A} bzw. Ph_{B} zugeführt, durchströmt diesen radial und wird über den Spalt (263) zwischen Hohlzylinderaußenwand (264) und äußerem Rohr (265) gleicher Länge abgeleitet. Die Gefäßdeckel sind nicht dargestellt.

## Patentansprüche

1. Verfahren zur Trennung eines Stoffgemisches durch Sorption der Mischungskomponenten an zwei unterschiedliche, in ihren Sorptionseigenschaften unabhängig voneinander einzeln einstellbare Sorptionsmittel und durch Zurücklegen einer Trennstrecke der Sorptionsmittel mit den sorbierten Mischungskomponenten, nach dem man das zu trennende Stoffgemisch in den Trennraum (3) zwischen den Oberflächen der Sorptionsmittel (1,2) einbringt, wobei sich zwischen den Sorptionsmitteln (1,2) ein Zwischenraummedium befindet, in dem die Mischungskomponenten lösbar und/oder dispergierbar und/oder in das sie verdampfbar sind, und ein Austausch des Zwischenraummediums und damit eine Equilibrierung der aufzutrennenden Stoffe zwischen den Oberflächen der Sorptionsmittel (1,2) erfolgt, und sich die die Sorptionsmittel enthaltenden Phasen zueinander in gegenläufiger Richtung bewegen, und man die auf den Sorptionsmitteln befindlichen aufgetrennten Komponenten des Gemisches nach Zurücklegen der Trennstrecke gewinnt, dadurch gekennzeichnet, daß der Trennraum (3) durch mindestens zwei oder mehrere hohle, mit Strukturelementen gefüllte, konzentrisch übereinander angeordnete Zylinderscheiben (134, 135) Z_{A} und Z_{B} gebildet wird, die die aus den Sorptionsmitteln (1,2) bestehenden oder diese enthaltenden Trennmedien Ph_{A} und Ph_{B} enthalten, wobei die Zylinderscheiben Z_{A} und Z_{B} alternierend angeordnet sind und sich um eine gemeinsame Achse gegenläufig zueinander bewegen.

2. Verfahren nach Anspruch 1, dadurch gekennzeichnet, daß die Zylinderscheiben Z_{A} und Z_{B} den Grundriß eines Hohlzylinders (188) besitzen.

3. Verfahren nach Anspruch 1 oder 2, dadurch gekennzeichnet, daß die Stukturelemente in Form von Fasern und/oder Stäbchen (147) oder in Form von Kapillaren oder dünnen Rohren (157) oder in Form von Lamellen (167) ausgebildet sind.

4. Verfahren nach Anspruch 1 oder dadurch gekennzeichnet, daß die Strukturelemente in Form von Segmenten ausgebildet sind.

5. Verfahren nach Anspruch 4, dadurch gekennzeichnet, daß die Segmente die Form von tortenstückartigen Segmenten (177) oder von kreisförmigen Segmenten (187) besitzen.

6. Verfahren nach Anspruch 4 oder 5, dadurch gekennzeichnet, daß die Segmente mit körnigen, faserigen, kapillarrohrartigen oder folienartigen Trenn- und/oder Trägermaterialien, die aus den Sorptionsmitteln (1,2) bestehen und/oder deren Oberfläche die Sorptonsmittel (1,2) trägt, gefüllt sind.

7. Verfahren nach Anspruch 6, dadurch gekennzeichnet, daß die Trenn- und/oder Trägermaterialien Kieselgele, Sand, Diatomeenerde, gebranntes Tonmehl, Polymerpartikel, Polymerfasern, z.B. Baumwolle, Schurwolle, Nylonfasern, Glaswolle, Kapillarröhren, z.B. aus Glas oder organischen Polymeren und/oder Glaskugeln, sind.

8. Verfahren nach einem der Ansprüche 1 bis 7, dadurch gekennzeichnet, daß die Drehung der Zylinderscheiben diskontinuierlich erfolgt und daß sich entsprechende Strukturelemente, z.B. Segmente (177) während der Ruhephase (Equilibrierphase) übereinander befinden.

9. Verfahren nach einem der Ansprüche 1 bis 8, dadurch gekennzeichnet, daß man das zu tretende Stoffgemisch über ein geeignetes Eintragssystem einträgt, daß der Austrag der Komponenten (Fraktionen) des aufgetrennten Stoffgemisches von den Sorptionsmitteln durch ein geeignetes Austragssystem erfolgt, und daß man als Teil eines Ein- und/oder Austragssystems ruhende Zylinderscheiben (137,191; 138,192) Z_{A} und Z_{B} verwendet.

10. Verfahren nach Anspruch 9, dadurch gekennzeichnet, daß die Zylinderscheiben (137,191) und (138,192) eine im Prinzip gleichartige Segmentierung wie die Zylinderscheiben (134,135) Z_{A} und Z_{B} aufweisen.

11. Verfahren nach einem der Ansprüche 1 bis 10, dadurch gekennzeichnet, daß man zur Trennung eines Gemisches aus den Komponenten A und B dem Segment (226), das dem Austragungsort (227) der Komponente A gegenüberliegt, und/oder dem Segment (224), das dem Austragungsort (225) der Komponente B gegenüberliegt, die Komponente A und/oder die Komponete B zuführt.

12. Verfahren nach einem der Ansprüche 1-11, dadurch gekennzeichnet, daß die Temperatur der Sorptionsmittel verschieden sein kann und/oder ein Temperaturgradient in Richtung der Trennstrecke vorliegt.

13. Verfahren nach einem der Ansprüche 1 bis 12, dadurch gekennzeichnet, daß die Strömung des Zwischenraummediums mittels eines Umwälzsystems (136) hergestellt wird.

14. Verfahren nach Anspruch 13, dadurch gekennzeichnet, daß jedem Strukturelement, z.B. jedem Segment der Eintrags(137, 191)- und Austrags(138, 192)-Scheiben, ein Umwälzsystem (136,194) zugeordnet ist.

15. Verfahren nach einem der Ansprüche 13 oder 14, dadurch gekennzeichnet, daß das Umwälzsystem ein oszillierendes System oder ein zirkulierendes System ist.

16. Verfahren nach Anspruch 4, dadurch gekennzeichnet, daß man die einzelnen Segmente der Zylinderscheiben (134,135) durch entsprechende fest installierte, die Trennmedien Ph_{A} und Ph_{B} enthaltende Gefäße ersetzt, und die durch die schrittweise, gegenläufige Drehbewegung erreichte Abfolge der Equilibrierung der Kammern mit Ph_{A} mit den Kammern mit Ph_{B} mittels einer Ventilsteuerung zwischen den Gefäßen mit dem Trennmedium Ph_{A} und den Gefäßen mit dem Trennmedium Ph_{B} simuliert.

17. Verfahren nach Anspruch 16, dadurch gekennzeichnet, daß die fest installierten Gefäße aus einem für das Zwischenraummedium durchlässigen, das Trennmedium Ph_{A} bzw. Ph_{B} enthaltenden Hohlzylinder (262) bestehen, der sich innerhalb eines Rohres (265) gleicher Länge befindet, wobei die gemeinsamen Enden des Hohlzylinders und des Rohres mit je einem Deckel verschlossen sind, wobei eine Zuleitung in das Innere (261) des Hohlzylinders und ein Auslaß zwischen Hohlzylinderaußenwand (264) und Rohrinnenwand nach außen führt, so daß das Zwischenraummedium mit den Mischungskomponenten in das Innere des Hohlzylinders mit Ph_{A} bzw. Ph_{B} zugeführt wird, diesen radial durchströmt und danach durch den Spalt (263) zwischen äußerem Rohr und Hohlzylinder abgeleitet wird.

18. Verfahren nach Anspruch 16 oder 17, dadurch gekennzeichnet, daß man die Ventilsteuerung mittels einer Ventilmatrix, bestehend aus Ventilen mit z.B. 1 oder 2 Eingängen und 1, 2, 3 oder mehr Ausgängen, einer geeigneten Verknüpfung der Ventile untereinander und mit den Gefäßen mit Ph_{A} und Ph_{B}, und einer geeigneten Ventil-Steuerlogik und/oder mittels eines 2- oder 3-Scheiben-Gegenstrom-Simulations-Ventils durchführt.

19. Verfahren nach einem der Ansprüche 16 oder 17, dadurch gekennzeichnet, daß die Ventilsteuerung erzielt wird durch drei konzentrisch aufeinander liegende, ringförmige Scheiben (241; 242), die deckungsgleich, konzentrisch in gleichmäßigem Abstand angeordnet eine gleiche Anzahl von je zwei benachbarten Löchern ("Doppellöcher") aufweisen, wobei die Doppellöcher (243) der beiden äußeren Scheiben (241) des so gebildeten Drei-Scheiben-Zylinders auf ihren Außenseiten über jeweils eine Zu-und Rückleitung (245) mit den fest installierten Gefäßen verbunden sind und wobei an die eine Außenscheibe alle Gefäße mit dem Trennmedium Ph_{A} angeschlossen sind, an die andere Außenscheibe alle Gefäße mit dem Trennmedium Ph_{B}.

20. Verfahren nach Anspruch 19, dadurch gekennzeichnet, daß die Doppellöcher der beiden äußeren Scheiben auf ihren Außenseiten so mit geeigneten Schläuchen verbunden sind, daß eine Rotation dieser Scheiben um die Achse des Drei-Scheiben-Zylinders in beide Richtungen um jeweils 180° möglich ist und tur jeden Equilibrierschritt die beiden Außenscheiben um zB. jeweils eine oder mehrere, ggfs. die obere und untere auch um jeweils eine unterschiedliche Anzahl an Lochpositionen in entgegengesetzter Richtung weitergedreht werden, während die Doppellöcher der Mittelscheibe an geeigneten Stellen Ein- und Austragsanschlüsse (256) aufweisen der Gestalt, daß diese Löcher dann ca. in der Mitte gesperrt sind und stattdessen die so gebildeten Hülsenenden (258) die Anschlüsse aufweisen und die Mittelscheibe im Normalfall nicht bewegt wird.

21. Verfahren nach Anspruch 19 oder 20, dadurch gekennzeichnet, daß die Mittelscheibe mit den an geeigneten Stellen befindlichen Ein- und Austragsanschlüssen ersetzt wird durch geeignete Ventile, z.B. 4-Wege-Ventile, die in die Hin- und Rückleitungen zu den fest installierten Gefäßen eingebaut sind, und eine geeignete Schaltlogik für diese Ein- und Austragsventile.

22. Verfahren nach Anspruch 16, dadurch gekennzeichnet, daß die fest installierten Gefäße mit dem Trennmedium Ph_{A} auf einer bestimmten Temperatur T_{A}, die fest installierten Gefäße mit dem Trennmedium Ph_{B} auf einer bestimmten Temperatur T_{B} gehalten werden und ggfs. in die Verbindungswege zwischen den fest installierten Gefäßen mit Ph_{A} bzw. Ph_{B} geeignete Wärmeaustauscher (235) eingebaut sind.

23. Vorrichtung zur Durchführung des Verfahrens nach einem der Ansprüche 1 bis 15, umfassend mindestens 2 oder mehrere hohle, mit Strukturelementen gefüllte, konzentrisch übereinander angeordnete Zylinderscheiben (134, 135) Z_{A} und Z_{B}, die die aus den Sorptionsmitteln (1,2) bestehenden oder diese enthaltenden Trennmedien Ph_{A} und Ph_{B} enthalten, wobei die Zylinderscheiben Z_{A} und Z_{B} alternierend angeordnet sind und sich um eine gemeinsame Achse gegenläufig zueinander bewegen, und Eintragseinrichtungen (137,191) zur Zuführung des zu trennenden Stoffgemisches und Austragseinrichtungen (138,192) zur Gewinnung der aufgetrennten Fraktionen des Gemisches.

## Claims

1. Process for the separation of a mixture of substances by sorption of the components of the mixture on two different sorption agents, which can be adjusted individually and separately from each other in their sorption properties and passage through a separation section of the sorption agents with the ad- or absorbed components of the mixture, according to which process the mixture to be separated is introduced into the separation chamber (3) between the surfaces of the sorption agents (1, 2), and a gap medium is present between the sorption agents (1, 2) in which the components of the mixture can be dissolved and/or dispersed and/or vaporized, and an exchange of the gap medium is effected and consequently an equilibration of the substances to be separated between the surfaces of the sorption agents (1, 2), and in which the phases containing the sorption agents move in directions opposite to each other, and in which the separated components of the mixture located on the sorption agents are recovered after they pass through the separation section, this process being characterized in that the separation chamber (3) is formed by at least two or more hollow cylindrical disks (134, 135) Z_{A} and Z_{B}, which are filled with structural elements and are concentrically superimposed and contain the separation media Ph_{A} and Ph_{B}, consisting of or containing the sorption agents (1, 2) whereby the cylindrical disks Z_{A} and Z_{B} are alternately arranged and turn in opposite directions on a common axis.

2. Process according to Claim 1, characterized in that the cylindrical disks Z_{A} and Z_{B} possess the shape of a hollow cylinder (188).

3. Process according to Claim 1 or 2, characterized in that the structural elements have the form of fibers and/or thin rods (147) or of capillaries or thin tubes (157) or the form of lamina (167.

4. Process according to Claim 1 or 2, characterized in that the structural elements have the form of segments.

5. Process according to Claim 4, characterized in that the segments possess the shape of pie-segments (177) or circular segments (187).

6. Process according to Claim 4 or 5, characterized in that the segments are filled with particulate, fibrous, capillary- or foil-shaped separation and/or carrier materials, which consist of the sorption agents (1, 2) and/or have surfaces bearing the sorption agents (1, 2).

7. Process according to Claim 6, characterized in that the separation and/or carrier materials are silica gels, sand, diatomaceous earth, calcined clay, polymeric particles, polymeric fibers, e.g. cotton, wool, nylon fibers, glass wool, capillary tubes e.g. of glass or organic polymers and/or glass beads.

8. Process according to one of the Claims 1 to 7, characterized in that the rotation of the cylindrical disks is discontinuous and that corresponding segments, e.g. segments (177) are superimposed on each other during the rest phase (equilibration phase).

9. Process according to one of the Claims 1 to 8, in which the mixture of substances to be separated is introduced through a suitable charging system and the discharge of the components (fractions) of the separated mixture of substances from the sorption agents is accomplished through a suitable discharge system, characterized in that stationary cylindrical disks (137, 191; 138, 192) Z_{A} and Z_{B} are used as parts of the charging and/or discharging systems

10. Process according to Claim 9, characterized in that the cylindrical disks (137, 191) and (138, 192) possess in principle the same segmentation as the cylindrical disks (134, 135) Z_{A} and Z_{B}.

11. Process according to one of Claims 1 to 10, characterized in that for separation of a mixture consisting of the components A and B, the component A and/or the component B is introduced to the segment (226) lying opposite to the discharge location (227) for component A and/or to the segment (224) lying opposite to the discharge location (225) for component B.

12. Process according to one of the Claims 1 to 11, characterized in that the temperature of the sorption agents can be different and/or that a temperature gradient exists in the direction of the separation section.

13. Process according to one of the Claims 1 to 12, characterized in that the flow of the gap medium is produced with a circulation system (136).

14. Process according to Claim 13, characterized in that each structural element, e.g. each segment or the charging (137, 191) and the discharging (138, 192) disks is associated with one circulation system (136, 194).

15. Process according to one of Claims 13 or 14, characterized in that the circulation system is an oscillating system or a recirculation system.

16. Process according to Claim 4, characterized in that the individual segments of the revolving cylindrical disks (134, 135) are replaced by corresponding stationary vessels containing the separation media Ph_{A} and Ph_{B}, and the stepwise counter-rotational movement is simulated by a suitable valving control between the vessels with the separation medium Ph_{A} and the vessels with the separation medium Ph_{B}.

17. Process according to Claim 16, characterized in that the stationary vessels consist of a hollow cylinder (262) containing the separation medium Ph_{A} or Ph_{B} and being permeable for the gap medium, said hollow cylinder being located inside a tube (265) of equal length, and the common ends of the hollow cylinder and the tube each being closed by a cover, and where an inlet provision leads into the interior (261) of the hollow cylinder and an outlet provision leads from between the outer wall (264) of the hollow cylinder and the inner wall of the tube to the exterior, such that the gap medium with the components of the mixture is introduced into the interior of the hollow cylinder with Ph_{A} or Ph_{B}, flows through it radially and is then discharged through the gap (263) between the outer tube and the hollow cylinder.

18. Process according to Claims 16 or 17, characterized in that the valving control is achieved by means of a valve matrix consisting of valves with e.g. 1 or 2 inlets and 1, 2, 3 or more exits, a suitable interconnection of the valves between each other and the vessels with Ph_{A} and Ph_{B}, and a suitable valve control logic and/or by means of a 2- or 3-disk-counter current-simulation-valve.

19. Process according to one of the Claims 16 or 17, characterized in that the valving control is achieved by three concentrically superimposed, ring-shaped disks (241, 242) featuring an equal number of pairs of two neighboring holes each ("double holes") which are in concentric, congruent and equidistant position, and where the double holes (243) of the two outer disks (241) in the three-disk-cylinder thus formed, each are connected on their outboard sides by means of an inlet- and outlet conduit (245) each, to the stationary vessels, and where all the vessels containing Ph_{A} are connected to one outer disk and all vessels containing Ph_{B} are connected to the other outer disk.

20. Process according to Claim 19, characterized in that the double holes of the two outer disks on their outboard sides are connected with suitable hoses in such a manner as to allow a rotation of these disks around the axis of the three-disk-cylinder in both directions by 180 degrees each, and in that for each equilibration step, the two outer disks are advanced in opposing directions by e.g. one or more hole positions, and the number of these positions can be different for the upper and the lower disk, while the double holes in the middle disk have charging and discharging connectors (256) in appropriate locations configured such that these holes are blocked approximately midway and the thusly formed sleeve ends (258) bear the connectors, and the middle disk is normally not moved.

21. Process according to Claim 19 or 20, characterized in that the middle disk with its suitably located inlet- and outlet-connectors is replaced by suitable valves, e.g. 4-way valves, which are installed in the charging and discharging lines to and from the stationary vessels, and an appropriate control logic for these inlet and outlet valves.

22. Process according to Claim 16, characterized in that the stationary vessels with separation medium Ph_{A} are maintained at a certain temperature T_{A} and the stationary vessels with separation medium Ph_{B} are maintained at a certain temperature T_{B}, and, if appropriate, suitable heat exchangers (235) are installed in the connector lines between the vessels with Ph_{A} and/or Ph_{B}.

23. Device for performing the process according to one of the Claims 1 to 15, comprising at least two or more hollow, concentrically superimposed cylindrical disks (134, 135) Z_{A} and Z_{B}, which are filled with structural elements which contain the separation media Ph_{A} and Ph_{B} consisting of or containing the sorption agents (1, 2), whereby the cylindrical disks Z_{A} and Z_{B} are alternately arranged and turn in opposite directions on a common axis, and charging provisions (137, 191) for introducing the mixture of substances to be separated, and discharging provisions (138, 192) for the recovery of the separated fractions of the mixture.

## Revendications

1. Procédé de séparation d'un mélange de substances par sorption des composants du mélange en deux agents de sorption différents, variables individuellement et indépendamment l'un de l'autre dans leurs propriétés de sorption et par le recouvrement d'une distance de séparation des agents de sorption avec les composants du mélange ad- ou ab-sorbés, selon lequelle le mélange de substances à séparer est introduit dans l'espace de séparation (3) existant entre l'es surfaces des agents de sorption (1, 2), un milieu interstitiel se trouvant entre les agents de sorption (1, 2), dans lequel les composants du mélange sont solubles et/ou dispersables et/ou dans lequel ils sont évaporables, et un échange du milieu interstitiel et donc un équilibrage des matières à séparer entre les surfaces des agents de sorption (1, 2) se produit, et les phases contenant les agents de sorption se déplacant ensemble en sens contraire, et on obtient les composants du mélange séparès se trouvant sur les agents de sorption après recouvrement ce la distance de séparation, caractérisé en ce que l'espace de séparation (3) est formé par au moins deux du plusieurs disques cylindriques (134, 135) Z_{A} et Z_{B} creux, remplis d'éléments de structure, disposés de façon concentrique les uns au-dessus des autres, qui contiennent les milieux ce séparation Ph_{A} et Ph_{B} composés des agents de sorption (1, 2) ou contenant ceux-ci, les disques cylindriques Z_{A} et Z_{B} étant disposés en alternance et se déplaçant ensemble en sens contraire autour d'un axe commun.

2. Procédé selon la revendication 1, caractérisé en ce que les disques cylindriques Z_{A} et Z_{B}, présentent le tracé d'un cylindre creux (188).

3. Procédé selon la revendication 1 ou 2, caractérisé en ce que les éléments de structure sont conçus sous forme de fibres et / ou de baguettes (147) ou sous forme de tubes capillaires ou de tubes (157) minces ou sous forme de lamelles (167).

4. Procédé selon la revendication 1 ou 2, caractérisé en ce que les éléments de structure sont conçus sous forme de segments.

5. Procédé selon la revendication 4, caractérisé en ce que les segments présentent la forme de segments (177) en forme de parts de tarte ou de segments (187) en forme de cercle.

6. Procédé selon la revendication 4 ou 5, caractérisé en ce que les segments sont remplis de matières de séparation ou de matières de support granuleuses, fibreuses, du type tubes capillaires ou du type feuilles, qui sont composés des agents de sorption (1,2) et / ou dont la surface porte les agents de sorption (1,2).

7. Procédé selon la revendication 6, caractérisé en ce que les matières de séparation et / ou de support sont des gels de silice, du sable, de la terre à diatomée, de la poudre d'argile brûlée, des particules polymères, des fibres polymères, par exemple du coton, de la laine vierge, des fibres de Nylon, de la laine de verre, des tubes capillaires, par exemple en verre ou on polymères organiques et / ou des billes de verre.

8. Procédé selon l'une des revendications 1 à 7, caractérisé en ce que la rotation des disques cylindriques se produit de façon discontinue et en ce que les éléments de structure correspondants, par exemple les segments (177) se trouvent les uns au-dessus des autres pendant la phase de repos (phase d'équilibre).

9. Procédé selon l'une des revendications 1 à 8, caractérisé en ce que l'on introduit le mélange de substances à séparer par l'intermédiaire d'un système d'alimentation approprié, en ce que la sortie des composants (fractions) du mélange de substances séparé des agents de sorption se produit grâce à un système de déchargement approprié, et en ce que on utilise des disques cylindriques (137, 191 ; 138, 192) Z_{A} et Z_{B} au repos comme partie d'un système d'alimentation et / ou de déchargement.

10. Procédé selon la revendication 9, caractérisé en ce que les disques cylindriques (137, 191) et (138, 192) présentent une segmentation similaire en principe à celle des disques cylindriques (134, 135) Z_{A} et Z_{B}.

11. Procédé selon l'une des revendications 1 à 10, caractérisé en ce que l'on apporte le composant A et/ou le composant B en vue de la séparation d'un mélange à partir des composants A et B au segment (226), qui est opposé au lieu de sortis (227) du composant A, et/ou au segment (224), qui est opposé au lieu de sortie (225) du composant B.

12. Procédé selon l'une des revendications 1 à 11, caractérisé en ce que la température des agents de sorption peut être différent et/ou est présent un gradient thermique dans la sens de la distance de séparation.

13. Procédé selon l'une des revendications 1 à 12, caractérisé en ce que le courant du milieu interstitiel est produit au moyen d'un système de circulation (136).

14. Procédé selon la revendication 13, caractérisé en ce que un système de circulation (136, 194) est affecté à chaque élément de structure, par exemple à chaque segment des disques d'entrée (137, 191) et de sortie (138, 192).

15. Procédé selon l'une des revendications 13 ou 14, caractérisé en ce que le système de circulation est un système oscillant ou un système circulant.

16. Procédé selon la revendication 4, caractérisé en ce que l'on remplace les différents segments des disques cylindriques (134, 135) par des récipients correspondants solidement installés contenant les milieux de séparation Ph_{A} et Ph_{B}, et en ce que l'on simule l'ordre de l'équilibrage des chambres comportant le Ph_{A} avec les chambres comportant le Ph_{B}, obtenu par le mouvement de rotation progressivement contraire, au moyen d'une commande à vannes située entre les récipients comportant le milieu de séparation Ph_{A} et les récipients comportant le milieu de séparation Ph_{B}.

17. Procédé selon la revendication 16, caractérisé en ce que les récipients installés solidement se composent d'un cylindre creux (262) laissant passer le milieu interstitiel, contenant le milieu de séparation Ph_{A} ou Ph_{B}, ce dernier cylindre se trouvant à l'intérieur d'un tube (265) de même longueur, les extrémités communes du cylindre creux et du tube étant fermées chacune par un couvercle, une conduite d'alimentation condulsant à l'intérieur (261) du cylindre creux et une conduite de sortie se trouvant entre la parol extérieure (264) du cylindre creux et la parol intérieure du tube condulsant vers l'extérieur, de sorte que le milieu interstitiel comportant les composants du mélange est amené a l'intérieur du cylindre creux comportant le Ph_{A} resp. le Ph_{B}, traverse celui-ci radialement et est ensuite dérivé au travers de la fente (263) entre le tube extérieur et le cylindre creux.

18. Procédé selon la revendication 16 ou 17, caractérisé en ce l'on met en oeuvre la commande de vannes au moyen d'une matrice de vannes, composée de vannes comportant par exemple 1 ou 2 entrées et 1, 2, 3 sorties ou plus, d'une liaison appropriée des vannes entre elles et avec les récipients comportant le Ph_{A} et le Ph_{B}, et d'une logique de commande de vannes appropriée et / ou au moyen d'une vanne de simulation de contre-courant à 2 ou 3 disques.

19. Procédé selon l'une des revendications 16 ou 17, caractérisé en ce que la commande de vanne est obtenue par trois disques (241 ; 242) annulaires, situés l'un sur l'autre de façon concentrique, qui présentent un nombre égal de deux trous voisins à chaque fois (_{"}doubles trous_{"}), disposés de façon coïncidente, concentrique à intervalle régulier, les trous doubles (243) des deux disques (241) extérieurs du cylindre à trois disques ainsi formé étant reliés sur leurs côtés extérieurs par I'intermédiaire à chaque fois d'une conduite d'alimentation et d'une conduite de retour (245) avec les récipients solidement installés et tous les récipients comportant le milieu de séparation Ph_{A} étant raccordés à un disque extérieur, tous les récipients comportant le milieu de séparation Ph_{B} à l'autre disque extérieur

20. Procédé selon la revendication 19, caractérisé en ce que les trous doubles des deux disques extérieurs sont reliés sur leurs côtés extérieurs avec des tuyaux flexibles appropriés de sorte qu'une rotation de ces disques autour de l'axe du cylindre à trois disques est possible dans les deux sens à 180° à chaque fois et en ce que pour chaque étape d'équilibrage les deux disques extérieurs sont tournés en sens contraire par exemple à chaque fois d'une ou de plusieurs positions de trous, le cas échéant le disque supérieur et le disque inférieur également à chaque fois d'un nombre différent de positions de trous, tandis que les trous doubles du disque médian présentent des raccords d'entrée et de sortie (256) à des endroits appropriés, de sorte que ces trous sont alors bouchés substantiellement au milieu et qu'en revanche les extrémités de gaine (258) ainsi formées présentent les raccords et te disque médian n'est pas déplacé dans le cas normal.

21. Procédé selon la revendication 19 ou 20, caractérisé en ce que le disque médian comportant les raccords d'entrée et de sortie se trouvant aux endroits appropriés est remplacé par des vannes appropriées, par exemple des vannes à 4 voies, qui sont montées dans les conduites d'amenée et de retour aux récipients solidement installes, et une logique de commande appropriée pour ces vannes d'entrée et de sortie.

22. Procédé selon la revendication 16, caractérise en ce que les récipients solidement installés comportant le milieu de séparation Ph_{A} sont maintenus à une certaine température T_{A}, les récipients solidement installés comportant le milieu de séparation Ph_{B} sont maintenus à une certaine température T_{B} et des échangeurs thermiques (235) appropriés sont montés, le cas échéant dans les voies de desserte se trouvant entre les récipients installes solidement comportant le Ph_{A} resp. le Ph_{B}.

23. Dispositif destiné à la mise en oeuvre du procédé selon l'une des revendications 1 à 15, comprenant au moins 2 ou plusieurs disques cylindriques (134, 135) Z_{A} et Z_{B} creux remplis d'éléments de structure, disposés de façon concentrique les uns au-dessus des autres, qui contiennent les milieux de séparation Ph_{A} et Ph_{B} composés des agents de sorption (1, 2) ou contenant ceux-ci, les disques cylindriques Z_{A} et Z_{B} étant disposés en alternance et se déplaçant ensemble en sens contraire autour d'un axe commun, et comprenant des dispositifs d'entrée (137, 191) destinés à l'amenée du mélange de substances à séparer et des dispositifs de sortie (138, 192) destinés à recueillir les fractions séparées du mélange.
